# DEMANDE DE BREVET EUROPEEN

(11) **EP 4 821 814 A1**
(43) Date de publication de la demande: **14.10.2026**
(21) Numéro de dépôt: 26162954.7
(22) Date de dépôt: 06.03.2026
(51) Int. Cl.: B64D 11/06

(54) **PLANCHE DE BORD D AÉRONEF INTÉGRANT AU MOINS UNE TABLETTE MOBILE SIMPLIFIÉE, AÉRONEF COMPORTANT UNE TELLE PLANCHE DE BORD**

(30) Priorité: 09.04.2025 FR 2503780
(71) Demandeur: Airbus Operations S.A.S., 31060 Toulouse (FR)
(72) Inventeur: PELLIZZON, Sébastien, 31060 TOULOUSE (FR); LAMRABTI, Mounir, 31300 TOULOUSE (FR); LEROY, Paul, 31300 TOULOUSE (FR); COUROUBLE, Benoît, 31300 TOULOUSE (FR)
(74) Mandataire: Fantin, Laurent

(57) **Abrégé**

L'invention a pour objet une planche de bord (16) d'aéronef qui comprend :
- au moins une tablette mobile (20) configurée pour se translater entre des positions rétractée et déployée,
- au moins un support de tablette (38) relié à la planche de bord (16) de part et d'autre de la tablette mobile (20), la planche de bord (16) et/ou le support de tablette (38) étant configuré(e)(s) pour loger la tablette mobile (20) au moins dans la position rétractée,
- au moins un système de guidage (22) intercalé entre la tablette mobile (20) et le support de tablette (38),
- au moins un système de verrouillage/déverrouillage configuré pour maintenir la tablette mobile (20) dans au moins une position parmi la position déployée et la position rétractée.

## Description

La présente demande se rapporte à une planche de bord d'aéronef qui intègre au moins une tablette mobile simplifiée ainsi qu'à un aéronef comportant une telle planche de bord. Selon une configuration, une planche de bord d'aéronef comprend une tablette devant chaque siège de pilotage, mobile entre une position rétractée et une position déployée. Dans cette dernière position, la tablette est située au-dessus de l'assise du siège de pilotage.

En position déployée, la tablette est configurée pour servir de support pour un plateau-repas ou un clavier par exemple. La tablette est conçue pour permettre au pilote d'y prendre appui. Selon un mode de réalisation de l'art antérieur, la tablette mobile comprend plus de 150 pièces assemblées et présente une cinématique complexe. Par conséquent, ce type de tablette mobile est relativement lourd et présente un coût de fabrication relativement important.

La présente invention vise à remédier à tout ou partie des inconvénients de l'art antérieur. A cet effet, l'invention a pour objet une planche de bord d'aéronef comprenant au moins une face inférieure ainsi qu'au moins une tablette mobile configurée pour se translater parallèlement à une direction longitudinale entre une position rétractée dans laquelle la tablette mobile est quasi intégralement positionnée sous la face inférieure de la planche de bord et une position déployée dans laquelle la tablette mobile est en saillie par rapport à la planche de bord.

Selon l'invention, la planche de bord comprend :
- au moins un support de tablette relié à la planche de bord de part et d'autre de la tablette mobile, la face inférieure de la planche de bord et/ou le support de tablette étant configuré(e)(s) pour loger la tablette mobile au moins dans la position rétractée,
- au moins un système de guidage positionné sous la tablette mobile et intercalé entre cette dernière et le support de tablette.
- au moins un système de verrouillage/déverrouillage configuré pour maintenir la tablette mobile dans au moins une position parmi la position déployée et la position rétractée.

En complément, le système de verrouillage/déverrouillage comprend :
- un verrou mobile entre des positions sortie et rentrée et solidaire de la tablette mobile,
- une commande configurée pour contrôler la position du verrou,
- au moins un ressort pour maintenir le verrou en position sortie ;
- un deuxième logement ou une deuxième butée solidaire du support de tablette configuré(e) pour coopérer avec le verrou en position sortie lorsque la tablette mobile est dans la position déployée ;
- un loquet qui présente un chant inférieur pourvu d'une encoche ainsi qu'une butée, le loquet pivotant entre une position en contact dans laquelle le chant inférieur du loquet est en contact avec la butée de sorte que l'encoche forme avec la butée le deuxième logement ainsi qu'une position écartée dans laquelle le chant inférieur du loquet est écarté de la butée ;
- au moins un ressort configuré pour faire pivoter le loquet vers la position en contact et le maintenir dans cette position.

Selon l'invention, la planche de bord ainsi que ses systèmes de guidage et de verrouillage/déverrouillage comprennent un nombre réduit de pièces et présentent des cinématiques simplifiées, ce qui tend à réduire leur masse et leur coût de fabrication. L'invention a également pour objet un aéronef comprenant au moins une planche de bord selon l'une des caractéristiques précédentes.

D'autres caractéristiques et avantages ressortiront de la description de l'invention qui va suivre, description donnée à titre d'exemple uniquement, en regard des dessins annexés parmi lesquels :
- La figure 1 est une représentation schématique d'une cabine de pilotage d'un aéronef illustrant un mode de réalisation de l'invention,
- La figure 2 est une vue en perspective d'une tablette mobile illustrant un premier mode de réalisation de l'invention,
- La figure 3 est une vue de face de la tablette mobile visible sur la figure 2,
- La figure 4 est une vue latérale de la tablette mobile visible sur la figure 2, en position rétractée sur la partie (A) et en position déployée sur la partie (B),
- La figure 5 est une vue en perspective de la tablette mobile visible sur la figure 2 à l'état démonté,
- La figure 6 est une vue en perspective d'un système de verrouillage/déverrouillage de la tablette mobile visible sur la figure 2,
- La figure 7 est une vue en perspective d'une partie du système verrouillage/déverrouillage visible sur la figure 6,
- La figure 8 est une vue en perspective de la tablette mobile visible sur la figure 2 dans la position rétractée,
- La figure 9 est une vue en perspective de la tablette mobile visible sur la figure 2 dans la position déployée,
- La figure 10 est une vue en perspective de dessus d'une tablette mobile illustrant un deuxième mode de réalisation de l'invention,
- La figure 11 est une vue en perspective de dessous de la tablette mobile visible sur la figure 10,
- La figure 12 est une vue en perspective d'un système de verrouillage/déverrouillage de la tablette mobile visible sur la figure 10.

Selon un mode de réalisation, un aéronef 10 comprend un fuselage 12 qui s'étend selon une direction longitudinale DL entre une pointe avant 12.1 et une pointe arrière. L'aéronef comporte une cabine de pilotage 14, située au niveau de la pointe avant 12.1, qui présente au moins une planche de bord 16 ainsi qu'au moins un siège de pilotage 18 positionné face à la planche de bord 16, décalé vers la pointe arrière par rapport à la planche de bord 16. Selon une configuration, la cabine de pilotage 14 comprend deux sièges de pilotage 18 décalés selon une direction transversale DT perpendiculaire à la direction longitudinal DL.

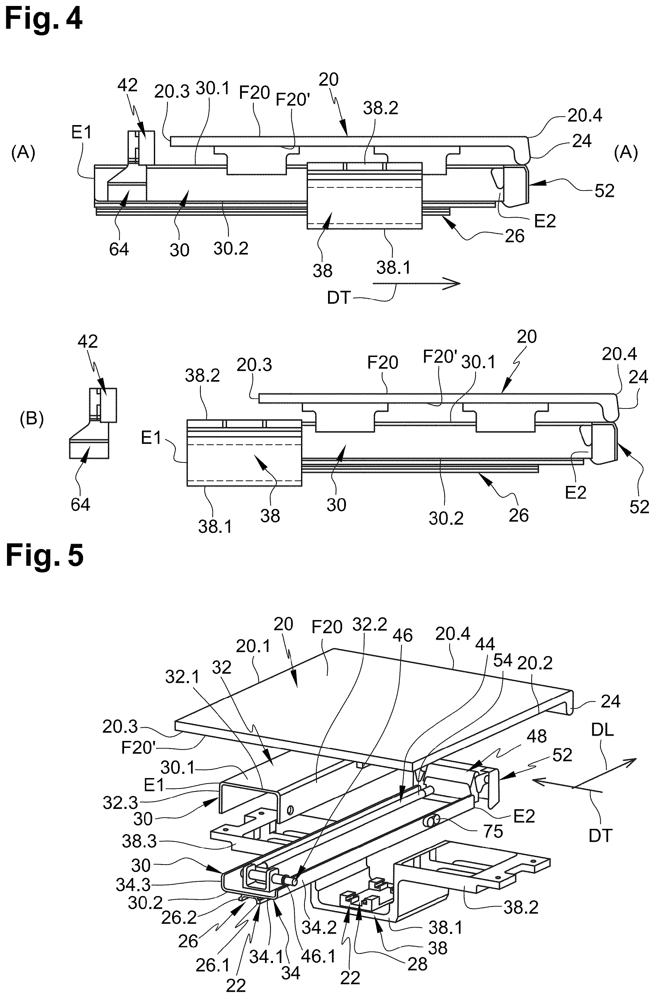

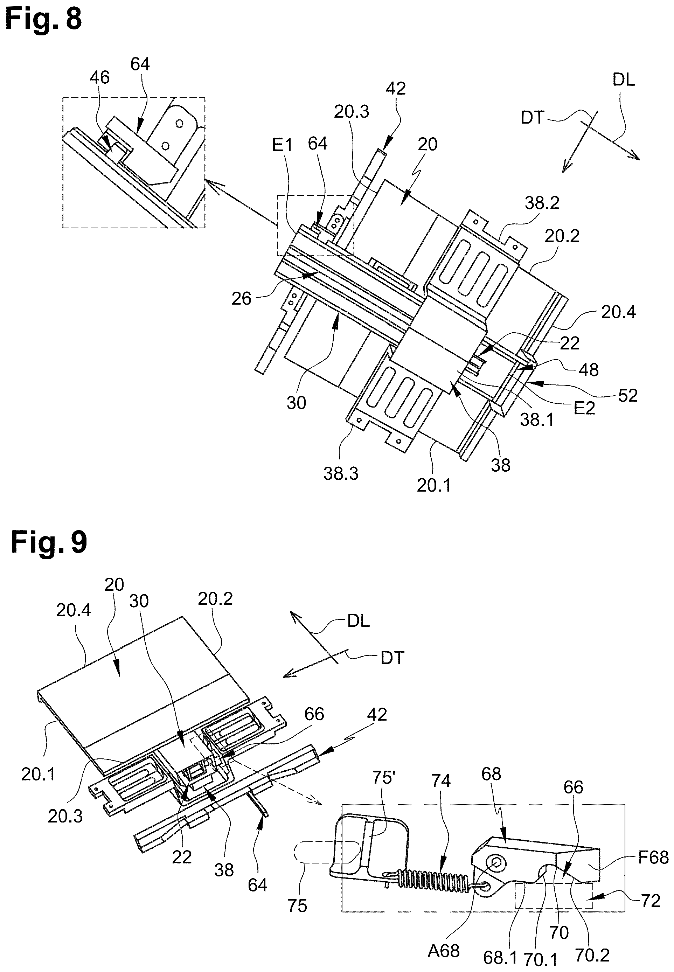

La planche de bord 16 comprend au moins une tablette mobile 20 sensiblement horizontale ainsi qu'au moins un système de guidage 22 reliant la tablette mobile 20 et la planche de bord 16, ledit système de guidage 22 étant configuré pour permettre à la tablette mobile 20 de se translater selon une direction parallèle à la direction longitudinale DL, sensiblement horizontale, entre une position rétractée visible sur la partie (A) de la figure 4 et la figure 8 ainsi qu'une position déployée visible sur la partie (B) de la figure 4 et la figure 9.

Selon un agencement, la tablette mobile 20 présente une face supérieure F20 sensiblement horizontale, une face inférieure F20' parallèle à la face supérieure F20, des bords latéraux droit et gauche 20.1, 20.2 sensiblement parallèles entre eux et à la direction longitudinale DL ainsi que des bords avant et arrière 20.3, 20.4 sensiblement parallèles entre eux et à la direction transversale DT. Le bord arrière 20.4 est décalé vers la pointe arrière par rapport au bord avant 20.3. La tablette mobile 20 présente un plan de symétrie PS parallèle à la direction longitudinale DL, sensiblement perpendiculaire aux faces supérieure et inférieure F20, F20', parallèle aux bords latéraux droit et gauche 20.1, 20.2 et équidistant de ces derniers.

Selon un mode de réalisation, la tablette mobile 20 comprend un rebord 24 situé au niveau du bord arrière 20.4, en saillie par rapport à la face inférieure F20'.

La tablette mobile 20 et son rebord 24 forment une pièce d'un seul tenant en matière plastique par exemple.

Selon une configuration, chaque système de guidage 22 est positionné sous la tablette mobile 20.

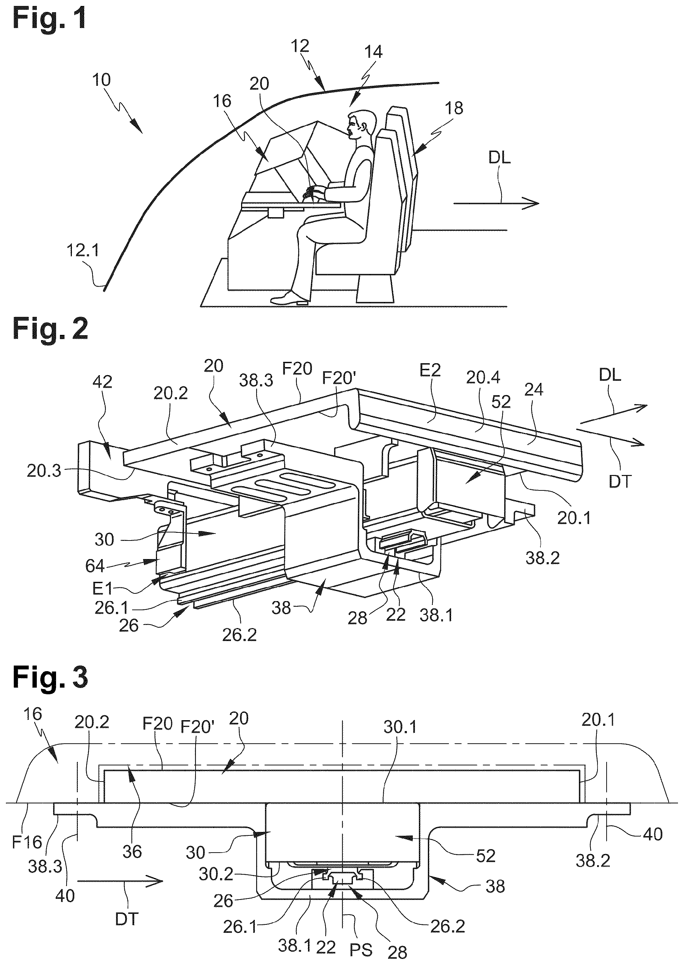

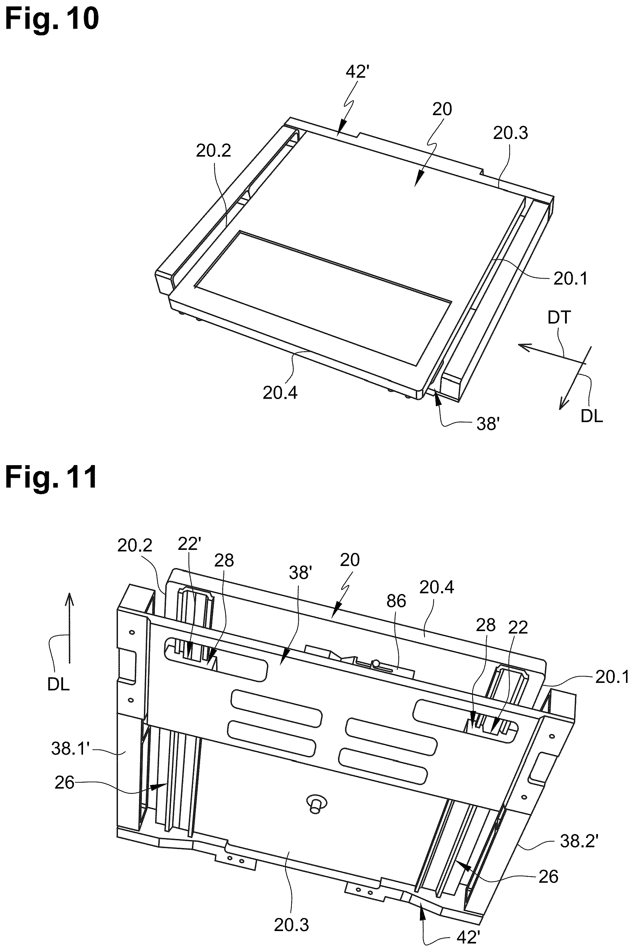

Selon un premier mode de réalisation visible sur les figures 2 à 9, la planche de bord 16 comprend un unique système de guidage 22 positionné au niveau du plan de symétrie PS. Selon un deuxième mode de réalisation visible sur les figures 10 à 12, la planche de bord 16 comprend plusieurs systèmes de guidage 22 positionnés de manière symétrique par rapport au plan de symétrie PS. Selon une configuration, la planche de bord 16 comprend des premier et deuxième systèmes de guidage 22, 22' respectivement proches des bords latéraux droit et gauche 20.1, 20.2.

Selon un mode de réalisation visible notamment sur la figure 3, chaque système de guidage 22, 22' comprend un rail 26, qui présente deux ailes 26.1, 26.2 qui s'évasent, solidaire d'un premier élément parmi la tablette mobile 20 et la planche de bord 16 ainsi qu'une rainure 28 qui présente une forme complémentaire à celles du rail 26 (complémentaire notamment à celles des première et deuxième ailes 26.1, 26.2 du rail 26) pour permettre à ce dernier de coulisser dans la rainure 28 selon une direction parallèle à la direction longitudinale DL, la rainure 28 étant solidaire d'un deuxième élément différent du premier élément parmi la tablette mobile 20 et la planche de bord 16. Selon un agencement, le rail 26 est solidaire de la tablette mobile 20 et la rainure 28 est solidaire de la planche de bord 16. Selon cet agencement, chaque rail 26 s'étend sur toute la longueur de la tablette mobile 20 (dimension entre les bords avant et arrière 20.3, 20.4), ce qui contribue à rigidifier la tablette mobile 20. Selon une configuration, le rail 26 et la rainure 28 comprennent un revêtement ou sont réalisés en un matériau favorisant le glissement du rail 26 dans la rainure 28.

Selon un mode de réalisation visible sur les figures 2 à 9, la tablette mobile 20 comprend un longeron creux 30 fixé sous la tablette mobile 20 et positionné au niveau du plan de symétrie PS. Le longeron creux 30 comprend une paroi supérieure 30.1 fixée à la tablette mobile 20 ainsi qu'une paroi inférieure 30.2 sous laquelle est fixé le rail 26 du système de guidage 22. Ce longeron creux 30 permet de rigidifier la tablette mobile 20 selon la direction longitudinale DL. Il présente une longueur (dimension selon la direction longitudinale DL) supérieure ou égale à celle de la tablette mobile 20 (dimension entre les bords avant et arrière 20.3, 20.4). Selon un agencement, le longeron creux 30 comprend une extrémité avant E1 située à l'avant du bord avant 20.3 de la tablette mobile 20 et une extrémité arrière E2 située approximativement au niveau du bord arrière 20.4 de la tablette mobile 20.

Selon une configuration visible sur la figure 5, le longeron creux 30 comprend une première cornière en U 32 qui présente une première base 32.1 correspondant à la paroi supérieure 30.1 du longeron creux 30 et des premières ailes 32.2, 32.3 ainsi qu'une deuxième cornière en U 34 qui présente une deuxième base 34.1 correspondant à la paroi inférieure 30.2 du longeron creux 30 et des deuxièmes ailes 34.2, 34.3 positionnées entre les premières ailes 32.2, 32.3 de la première cornière en U 32, les première et deuxième cornières en U 32, 34 étant emboîtées l'une dans l'autre de manière à former le longeron creux 30 et maintenues assemblées par des éléments de fixation.

Bien entendu, l'invention n'est pas limitée à cette configuration pour le longeron creux 30.

Selon un mode de réalisation visible sur la figure 3, la planche de bord 16 présente une face inférieure F16 qui comprend un logement 36 dimensionné pour loger la tablette mobile 20 dans la position rétractée. En complément, la planche de bord 16 comprend un support de tablette 38 en forme d'oméga. Ce support de tablette 38 comprend une partie centrale en U 38.1, configurée pour loger le longeron creux 30, ainsi que des première et deuxième ailes 38.2, 38.3 configurées pour être plaquées contre la face inférieure F16 de part et d'autre du logement 36 et reliées à la planche de bord 16 par des éléments de fixation 40. Selon ce mode de réalisation, le système de guidage 22 est intercalé entre le longeron creux 30 et le support de tablette 38, la rainure 28 étant solidaire de la partie centrale en U 38.1.

Selon un mode de fabrication, le support de tablette 38 est obtenu par moulage.

En complément du support de tablette 38, la planche de bord 16 comprend une traverse fixe 42 fixée sous la face inférieure F16 de la planche de bord 16 sensiblement parallèle au bord avant 20.3 de la tablette mobile 20.

Selon une configuration, le support de tablette 38 et la traverse fixe 42 sont deux éléments distincts et séparés.

Selon un deuxième mode de réalisation visible sur les figures 10 à 12, la planche de bord 16 présente une face inférieure sensiblement plane et comprend un support de tablette 38' sensiblement parallèle à la face inférieure de la planche de bord 16, espacée de cette dernière d'une distance permettant de loger la tablette mobile 20 dans la position rétractée, ainsi que des longerons droit et gauche 38.1', 38.2' sensiblement parallèles entre eux et à la direction longitudinale DL, positionnés de part et d'autre de la tablette mobile 20 et reliant le support de tablette 38' ainsi que la planche de bord 16. Selon ce deuxième mode de réalisation, chaque rainure 28 du système de guidage 22, 22' est reliée au support de tablette 38'. En complément, la planche de bord 16 comprend une traverse fixe 42' fixée sous la face inférieure de la planche de bord 16 et sensiblement parallèle au bord avant 20.3 de la tablette mobile 20 et/ou reliée aux longerons droit et gauche 38.1', 38.2'.

Bien entendu, l'invention n'est pas limitée à ces premier et deuxième modes de réalisation pour le support de tablette 38'.

Quel que soit le mode de réalisation, la planche de bord 16 comprend :
- au moins une face inférieure F16,
- au moins une tablette mobile 20 configurée pour se déplacer entre une position rétractée dans laquelle la tablette mobile 20 est positionnée quasi intégralement sous la face inférieure F16 de la planche de bord 16 et une position déployée dans laquelle la tablette mobile 20 est en saillie par rapport à la planche de bord 16,
- au moins un support de tablette 38, 38' relié à la planche de bord 16 de part et d'autre de la tablette mobile 20, la face inférieure F16 de la planche de bord 16 et/ou le support de tablette 38, 38' étant configurés pour loger la tablette mobile 20 au moins dans la position rétractée,
- au moins un système de guidage 22, 22' positionné sous la tablette mobile 20 et intercalé entre cette dernière et le support de tablette 38, 38'.

Selon un mode de réalisation, la planche de bord 16 comprend au moins un système de verrouillage/déverrouillage 44 configuré pour maintenir la tablette mobile 20 dans au moins une position parmi la position déployée et la position rétractée.

Selon une configuration, le système de verrouillage/déverrouillage 44 est configuré pour alternativement maintenir la tablette mobile 20 dans la position déployée et dans la position rétractée.

Selon un premier mode de réalisation visible sur les figures 2 à 9, en présence d'un longeron creux 30, le système de verrouillage/déverrouillage 44 est essentiellement positionné dans ce dernier.

Selon ce premier mode de réalisation, le système de verrouillage/déverrouillage 44 comprend un verrou 46 solidaire de la tablette mobile 20, mobile selon une direction de verrouillage/déverrouillage parallèle à la direction transversale DT entre des positions sortie et rentrée, ainsi qu'une commande 48 configurée pour contrôler la position du verrou 46.

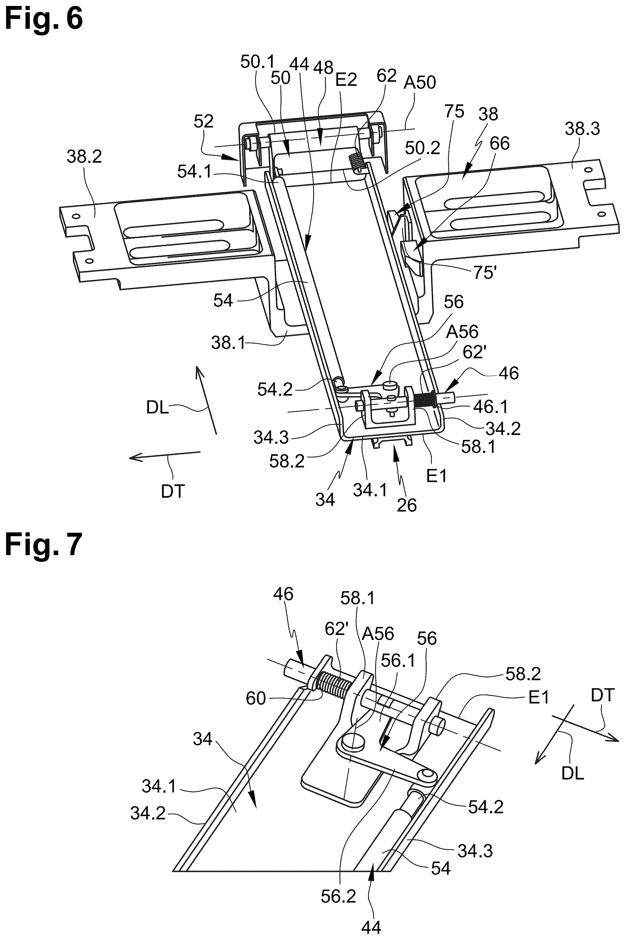

Selon un agencement visible sur les figures 6 et 7, le verrou 46 est positionné au niveau de l'extrémité avant E1 du longeron creux 30. En complément, la commande 48 comprend :
- une poignée 50 qui présente un premier bord 50.1 relié par un premier axe de pivotement A50 parallèle à la direction transversale DT à un capot 52 solidaire de l'extrémité arrière E2 du longeron creux 30 ainsi qu'un deuxième bord 50.2 distant du premier bord 50.1 et sensiblement parallèle à ce dernier,
- une biellette 54 qui présente une première extrémité 54.1 reliée au deuxième bord 50.2 de la poignée 50 et une deuxième extrémité 54.2,
- un renvoi en L 56 pivotant selon un deuxième axe de pivotement A56, sensiblement perpendiculaire aux directions longitudinale et transversale DL,DT, qui présente une première branche 56.1 reliée au verrou 46 et une deuxième branche 56.2 reliée à la deuxième extrémité 54.2 de biellette 54.

Le longeron creux 30 comprend des première et deuxième ailes longitudinales 58.1, 58.2 supportant le verrou 46 et lui permettant de se translater selon la direction de verrouillage/déverrouillage.

Le longeron creux 30 présente au moins un orifice traversant 60 pour permettre au verrou 46 de le traverser.

Selon un agencement, lorsque le deuxième bord 50.2 de la poignée 50 se rapproche du capot 52, le verrou 46 se translate de la position sortie vers la position rentrée. En sens contraire, lorsque le deuxième bord 50.2 de la poignée 50 s'écarte du capot 52, le verrou 46 se translate de la position rentrée vers la position sortie.

Le système de verrouillage/déverrouillage 44 comprend au moins un ressort 62 pour maintenir le verrou en position sortie. Selon un agencement, le système de verrouillage/déverrouillage 44 comprend un ressort de traction 62 reliant le longeron creux 30 et le deuxième bord 50.2 de la poignée 50 et/ou un ressort de compression 62' situé autour du verrou 46 et intercalé entre une collerette 46.1 solidaire du verrou et la première aile longitudinale 58.1 supportant le verrou 46.

Bien entendu, l'invention n'est pas limitée à ce mode de réalisation pour la commande 48. Selon un mode de réalisation visible sur les figures 8 et 9, le système de verrouillage/déverrouillage 44 comprend une première butée 64 (ou un premier logement) solidaire de la planche de bord 16, plus particulièrement de la traverse fixe 42, configurée pour coopérer avec le verrou 46 lorsque la tablette mobile 20 est dans la position rétractée afin d'immobiliser en translation ladite tablette mobile 20. La première butée 64 (ou le premier logement) et le verrou 46 sont configurés de telle sorte que lorsque le verrou 46 est en position sortie et situé à l'avant de la première butée 64 (ou dans le premier logement), la tablette mobile 20 soit immobilisée dans la position rétractée alors que lorsque le verrou 46 est en position rentrée, la tablette mobile 20 peut se translater entre la position rétractée et la position déployée.

En complément, le système de verrouillage/déverrouillage 44 comprend un deuxième logement 66 (ou une deuxième butée) solidaire du support de tablette 38 et configurée pour coopérer avec le verrou 46 en position sortie lorsque la tablette mobile 20 est dans la position déployée. Le deuxième logement 66 (ou la deuxième butée) et le verrou 46 sont configurés de telle sorte que lorsque le verrou 46 est en position sortie et situé dans le deuxième logement 66 (ou à l'arrière de la deuxième butée), la tablette mobile 20 soit immobilisée dans la position déployée alors que lorsque le verrou 46 est en position rentrée, la tablette mobile 20 peut se translater entre la position déployée et la position rétractée.

Selon un mode de réalisation visible sur la figure 9, le système de verrouillage/déverrouillage 44 comprend un loquet 68 configuré pour pivoter autour d'un troisième axe de pivotement A68 parallèle à la direction transversale DT. Ce loquet 68 présente un chant inférieur 68.1 qui comporte une encoche 70 en creux. En complément du loquet 68, le système de verrouillage/déverrouillage 44 comprend une butée 72. Le loquet 68 peut pivoter autour du troisième axe de pivotement A68 entre une position en contact dans laquelle le chant inférieur 68.1 du loquet 68 est en contact avec la butée 72 de sorte que l'encoche 70 forme avec la butée 72 le deuxième logement 66 ainsi qu'une position écartée dans laquelle le chant inférieur 68.1 du loquet 68 est écarté de la butée 72 et permet au verrou 46 de sortir du deuxième logement 66. Le système de verrouillage/déverrouillage 44 comprend également au moins un ressort 74 configuré pour faire pivoter le loquet 68 autour du troisième axe de pivotement A68 vers la position en contact et le maintenir dans cette position.

L'encoche 70 présente un chant droit 70.1, sensiblement perpendiculaire au chant inférieur 68.1, qui forme une butée bloquant le verrou 46 ainsi qu'un chant incliné 70.2 décalé vers l'avant par rapport au chant droit 70.1. Ce chant incliné 70.2 est configuré pour permettre au verrou 46 de pousser le loquet 68 dans la position écartée à l'encontre du ressort 74. L'encoche 70, plus particulièrement l'angle du chant incliné 70.2, et le ressort 74, plus particulièrement sa raideur, sont configurés de manière à ce que le verrou 46 soit bloqué dans le deuxième logement 66 lorsqu'un effort exercé sur la tablette mobile 20 visant à la translater en position rétractée est inférieur à un seuil donné et à ce que le verrou 46 pousse le loquet 68 en position écartée et sorte du deuxième logement 66 lorsqu'un effort exercé sur la tablette mobile 20 visant à la translater en position rétractée est supérieur ou égal au seuil donné.

Selon un mode de réalisation, le loquet 68 présente une face biseautée F68 configurée pour pousser le verrou 46 de la position sortie vers la position rentrée lorsque la tablette mobile 20 se translate vers la position déployée et que le verrou 46 glisse contre la face biseautée F68. Cette face biseautée F68 permet l'introduction du verrou 46 dans le deuxième logement 66 sans que la commande 48 ne soit actionnée.

En complément du loquet 68, le système de verrouillage /déverrouillage 44 peut comprendre un couple de butées 75, 75', respectivement solidaires du longeron creux 30 et du support de tablette 38, configurées pour venir en contact l'une contre l'autre lorsque la tablette mobile 20 est en position déployée.

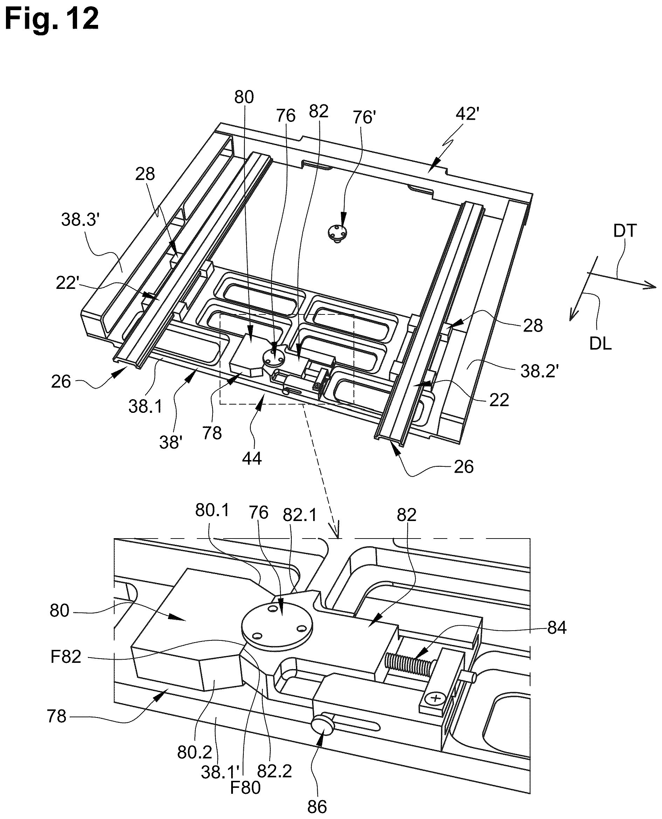

Selon un deuxième mode de réalisation visible sur la figure 12, le système de verrouillage/déverrouillage 44 comprend au moins un pion 76 solidaire de la tablette mobile 20, en saillie par rapport à la face inférieure F20', ainsi qu'une mâchoire 78 solidaire du support de tablette 38', ladite mâchoire 78 étant configurée pour occuper un état fermé dans lequel la mâchoire 78 maintient le pion 76 et immobilise la tablette mobile 20 ainsi qu'un état ouvert dans lequel la mâchoire 78 ne maintient pas le pion 76 et permet à la tablette mobile 20 de se translater. Selon une configuration, chaque pion 76 est positionné au niveau du plan de symétrie PS.

Selon un agencement, le système de verrouillage/déverrouillage 44 comprend des premier et deuxième pions 76, 76' décalés selon la direction longitudinale DL, les premier et deuxième pions 76, 76' ainsi que la mâchoire 78 étant positionnés de sorte que le premier pion 76 soit maintenu dans la mâchoire 78 lorsque la tablette mobile 20 est dans la position rétractée et que le deuxième pion 76' soit maintenu dans la mâchoire 78 lorsque la tablette mobile 20 est dans la position déployée.

Selon une configuration, la mâchoire 78 comprend des premier et deuxième mors 80, 82 décalés selon la direction transversale DT et positionnés de part et d'autre du plan de symétrie PS, au moins le deuxième mors 82 étant mobile entre une première position, correspondant à l'état fermé de la mâchoire 78, dans laquelle le deuxième mors 82 est en contact avec le premier mors 80 ainsi qu'une deuxième position, correspondant à l'état ouvert de la mâchoire 78 dans laquelle le deuxième mors 82 est écarté du premier mors 80.

En complément, le système de verrouillage/déverrouillage 44 comprend au moins un ressort 84 configuré pour maintenir le deuxième mors 82 dans la première position correspondant à l'état fermé de la mâchoire 78 ainsi qu'une commande 86 permettant d'écarter le deuxième mors 82 du premier mors 80.

Les premier et deuxième mors 80, 82 comprennent respectivement des première et deuxième faces de contact F80, F82 se faisant face et en contact l'une contre l'autre dans l'état fermé. Selon un mode de réalisation, les première et deuxième faces de contact F80, F82 comprennent des première et deuxième encoches formant, lorsque les premier et deuxième mors 80, 82 sont en contact l'un contre l'autre, un logement configuré pour loger le premier ou deuxième pion 76, 76' et l'immobiliser.

Selon un agencement, la mâchoire 78 et le ressort 84 sont configurés de manière à ce que le premier ou deuxième pion 76, 76' soit immobilisé dans la mâchoire 78 lorsqu'un effort exercé sur la tablette mobile 20 visant à la translater est inférieur à un seuil donné et à ce que le premier ou deuxième pion 76, 76' pousse le deuxième mors 82 dans la deuxième position et la mâchoire dans l'état ouvert lorsqu'un effort exercé sur la tablette mobile 20 visant à la translater est supérieur ou égal au seuil donné.

Selon une configuration, la mâchoire 78 et plus particulièrement chacune des première et deuxième faces de contact F80, F82 présentent des formes en biseau 80.1, 80.2, 82.1, 82.2 qui favorisent l'introduction d'un pion 76, 76' dans la mâchoire 78, entre les premier et deuxième mors 80, 82 dans les première et deuxième encoches.

Bien entendu, l'invention n'est pas limitée à ces premier et deuxième modes de réalisation pour le système de verrouillage/déverrouillage 44.

## Revendications

1. Planche de bord (16) d'aéronef comprenant au moins une face inférieure (F16) ainsi qu'au moins une tablette mobile (20) configurée pour se translater parallèlement à une direction longitudinale (DL) entre une position rétractée dans laquelle la tablette mobile (20) est quasi intégralement positionnée sous la face inférieure (F16) de la planche de bord (16) et une position déployée dans laquelle la tablette mobile (20) est en saillie par rapport à la planche de bord (16) ; **caractérisée en ce que** la planche de bord (16) comprend :
- au moins un support de tablette (38, 38') relié à la planche de bord (16) de part et d'autre de la tablette mobile (20), la face inférieure (F16) de la planche de bord (16) et/ou le support de tablette (38, 38') étant configurés pour loger la tablette mobile (20) au moins dans la position rétractée,
- au moins un système de guidage (22, 22') positionné sous la tablette mobile (20) et intercalé entre cette dernière et le support de tablette (38, 38'),
- au moins un système de verrouillage/déverrouillage (44) configuré pour alternativement maintenir la tablette mobile (20) dans la position déployée et dans la position rétractée ; et
**en ce que** le système de verrouillage/déverrouillage (44) comprend :
- un verrou (46) mobile entre des positions sortie et rentrée et solidaire de la tablette mobile (20),
- une commande (48) configurée pour contrôler la position du verrou (46),
- au moins un premier ressort (62) pour maintenir le verrou en position sortie,
- un deuxième logement (66) ou une deuxième butée solidaire du support de tablette (38) configuré(e) pour coopérer avec le verrou en position sortie (46) lorsque la tablette mobile (20) est dans la position déployée,
- un loquet (68) qui présente un chant inférieur (68.1) pourvu d'une encoche (70) ainsi qu'une butée (72), le loquet (68) pivotant entre une position en contact dans laquelle le chant inférieur (68.1) du loquet (68) est en contact avec la butée (72) de sorte que l'encoche (70) forme avec la butée (72) le deuxième logement (66) ainsi qu'une position écartée dans laquelle le chant inférieur (68.1) du loquet (68) est écarté de la butée (72),
- au moins un deuxième ressort (74) configuré pour faire pivoter le loquet (68) vers la position en contact et le maintenir dans cette position.

2. Planche de bord (16) selon la revendication 1, **caractérisée en ce que** la tablette mobile (20) comprend un plan de symétrie (PS) et **en ce que** la planche de bord (16) comprend un unique système de guidage positionné au niveau du plan de symétrie (PS) ou plusieurs systèmes de guidage (22, 22') positionnés de part et d'autre du plan de symétrie (PS).

3. Planche de bord (16) selon la revendication précédente, **caractérisée en ce que** chaque système de guidage (22, 22') comprend un rail (26) solidaire d'un premier élément parmi la tablette mobile (20) et le support de tablette (38, 38') ainsi qu'une rainure (28) qui présente une forme complémentaire à la forme du rail (26) pour permettre à ce dernier de coulisser dans la rainure (28), ladite rainure (28) étant solidaire d'un deuxième élément différent du premier élément parmi la tablette mobile (20) et le support de tablette (38, 38').

4. Planche de bord (16) selon l'une des revendications 2 à 3, **caractérisée en ce que** la planche de bord (16) comprend un unique système de guidage (22) positionné au niveau du plan de symétrie (PS) et **en ce que** la planche de bord (16) comprend un longeron creux (30) fixé sous la tablette mobile (20) au niveau du plan de symétrie (PS), le système de guidage (22) étant intercalé entre le longeron creux (30) et le support de tablette (38).

5. Planche de bord (16) selon la revendication précédente, **caractérisée en ce que** le système de verrouillage/déverrouillage (44) est positionné dans le longeron creux (30)

6. Planche de bord (16) selon l'une des revendications précédentes, **caractérisée en ce que** le système de verrouillage/déverrouillage (44) comprend une première butée (64) ou un premier logement solidaire de la planche de bord (16) configuré(e) pour coopérer avec le verrou (46) en position sortie lorsque la tablette mobile (20) est dans la position rétractée.

7. Planche de bord (16) selon l'une des revendications précédentes, **caractérisée en ce que** le loquet (68) comprend une face biseautée (F68) configurée pour pousser le verrou (46) de la position sortie vers la position rentrée.

8. Planche de bord (16) selon l'une des revendications précédentes, **caractérisée en ce que** l'encoche (70) et le ressort (74) sont configurés de sorte que le verrou (46) soit bloqué dans le deuxième logement (66) lorsqu'un effort exercé sur la tablette mobile (20) visant à la translater est inférieur à un seuil donné et à ce que le verrou (46) pousse le loquet (68) en position écartée et sorte du deuxième logement (66) lorsqu'un effort exercé sur la tablette mobile (20) visant à la translater est supérieur ou égal au seuil donné.

9. Aéronef comprenant au moins une planche de bord (16) selon l'une des revendications précédentes.
